# EUROPÄISCHE PATENTSCHRIFT

(11) **EP 1 523 519 B1**
(45) Veröffentlichungstag und Bekanntmachung des Hinweises auf die Patenterteilung: **06.02.2008**
(21) Anmeldenummer: 02793098.1
(22) Anmeldetag: 20.12.2002
(51) Int. Cl.: C08K 3/00, C08L 75/04, C08L 63/00, B21D 22/20, B21D 37/01

(54) **AUS KUNSTSTOFF BESTEHENDES WERKZEUG**
TOOL CONSISTING OF PLASTIC MATERIAL
OUTIL CONSTITUE DE PLASTIQUE

(30) Priorität: 09.07.2002 DE 10231001
(43) Veröffentlichungstag der Anmeldung: 20.04.2005
(73) Patentinhaber: Huntsman Advanced Materials (Switzerland) GmbH, 4057 Basel (CH)
(72) Erfinder: MEKKAOUI ALAOUI, Mohamed, 30163 Hannover (DE); VOSSBERG, Jürgen, 38444 Wolfsburg (DE); HOCHWALD, Peter, 79664 Wehr (DE); BATTERMANN, Winfried, 30851 Langenhagen (DE)
(74) Vertreter: Basfeld, Rainer
(86) Internationale Anmeldenummer: PCT/EP2002/014649
(87) Internationale Veröffentlichungsnummer: WO 2004/005385

(56) Entgegenhaltungen:
- WO-A-01/90241
- CN-A- 1 307 074
- CN-A- 1 354 198
- DE-A- 1 910 705
- DE-A- 2 524 806
- DE-A- 19 756 790
- DE-A- 19 859 298
- DE-A- 19 933 819

## Beschreibung

Die vorliegende Erfindung betrifft ein mindestens teilweise aus Kunststoff bestehendes Werkzeug gemäß dem Oberbegriff des Anspruchs 1.

In letzter Zeit hat die sogenannte Nano-Technologie in verschiedenen Bereichen der Technik an Bedeutung gewonnen. In der Nano-Technologie werden nanoskalige Teilchen mit Partikelgrößen wesentlich unterhalb eines µm eingesetzt. Aufgrund der Größe dieser Partikel im Bereich zwischen 10⁻⁹ und 10⁻⁶ Metern kommt man in die Größenordnung atomarer Strukturen in Festkörpersystemen, die nicht mehr den bekannten makroskopischen Gesetzmäßigkeiten gehorchen. Die Teilchengröße solcher Nanopartikel ist in der Regel kleiner als die Wellenlänge kurzwelligen sichtbaren Lichts (ca. 400 nm), so dass diese Teilchen auch mit einem herkömmlichen Mikroskop nicht mehr sichtbar gemacht werden können. Die Herstellung und Handhabung derartiger nanoskaliger Partikel ist mit relativ großem Aufwand verbunden. Verschiedene interessante technische Anwendungen nanoskaliger anorganischer Feststoffpartikel wurden in Betracht gezogen, zum Beispiel deren Verwendung in Beschichtungen für optische Elemente (siehe DE 41 33 621 A1). Wegen der genannten Anwendung geht es in dieser Schrift in erster Linie um die Herstellung transparenter Kompositmaterialien.

Die DE 197 46 885 A1 beschreibt ein Verfahren zur Herstellung von nanostrukturierten Formkörpern und Schichten ausgehend von einer fließfähigen Masse, die nanoskalige anorganische Feststoffteilchen mit polymerisierbaren Oberflächengruppen enthält, in eine Form eingebracht und dann unter Bildung eines gehärteten Formkörpers polymerisiert wird. Es werden keine spezifischen Anwendungen für die so hergestellten Formkörper genannt. Die Möglichkeit der Verwendung solcher Formkörper für beispielsweise Werkzeuge für Umformprozesse, die üblicherweise aus Metall gefertigt werden, wird in dieser Druckschrift nicht in Erwägung gezogen.

Aus der DE 199 33 819 A1 sind kompakte Polyurethan-Elastomere bekannt, die 0,01 bis 20 Gew.-% nanoskaliges SiO₂ enthalten. In diesem Dokument wird die Eignung derartiger Polyurethan-Elastomere für den Einsatz in Reifen, Rollen und Walzen sowie als Waizenbeschichtungen oder zur Herstellung von Riemen hervorgehoben.

Aus der WO 01/90 241 A1 sind Polymerzusammensetzungen mit nanoskaligen Partikeln bekannt. Als Einsatzzwecke dieser Polymerzusammensetzungen werden unter anderem Gehäuse, insbesondere Gehäuse für Gartengeräte genannt.

Aus CN-A-1307074 ist es bekannt, Nanopartikel zur Verstärkung von Polypropylen-Komposit-Materialien zu verwenden. Die verwendeten Nanopartikel weisen eine Größe zwischen 20 nm und 80 nm auf.

Ein Werkzeug der eingangs genannten Art ist aus der DE 25 24 806 A1 bekannt. Das darin beschriebene Werkzeug ist ein Tiefziehwerkzeug mit einer verschleißfesten Beschichtung aus Metall, die von einer Kunststoffabstützung getragen wird. Diese Kunststoffabstützung kann in den zu der Metallbeschichtung benachbarten Bereichen mit Materialien wie Siliziumkarbid, Stahlfasern oder Kohlefasern sowie in den übrigen Bereichen mit kostengünstigerem Füllmaterial wie beispielsweise Quarz verstärkt sein.

Werkzeuge, die für Umformprozesse wie Tiefziehverfahren oder dergleichen eingesetzt werden, haben häufig den Nachteil einer relativ kurzen Lebensdauer. Wenn man beispielsweise Stempel, Blechhalter oder Matrizen, die aus Kunststoff bestehen, für das Tiefziehen von Metallteilen verwendet, ergibt sich ein hoher Verschleiß an den Kontaktflächen und der Werkstoff des Werkzeugs hat den Mangel einer zu geringen Druckfestigkeit. Dies führt häufig zu einem schnellen Versagen der Werkzeuge.

Demgegenüber besteht die Aufgabe der vorliegenden Erfindung darin, ein mindestens teilweise aus Kunststoff bestehendes Werkzeug zur Verfügung zu stellen, welches bessere Verschleißeigenschaften aufweist und somit eine höhere Lebensdauer hat.

Die Lösung dieser Aufgabe liefert ein erfindungsgemäßes Werkzeug mit den Merkmalen des Hauptanspruchs. Erfindungsgemäß ist vorgesehen, dass das mindestens teilweise aus Kunststoff bestehende Werkzeug einen in den Kunststoff eingelagerten Anteil an nanoskaligen Partikeln enthält und dass in den Kunststoff des Werkzeugs weiterhin ein Anteil an einem Material mit Gleiteigenschaften eingelagert ist. Dadurch ergeben sich im Hinblick auf den Verschleiß wesentlich bessere Materialeigenschaften sowie in der Regel auch bessere Reibeigenschaften als bei herkömmlichen Kunststoffmaterialien. Bei der Verwendung derartiger erfindungsgemäßer Werkzeuge für Umformprozesse haben die Werkzeuge eine höhere Lebensdauer und ermöglichen daher den Einsatz in einer um ein vielfaches höheren Anzahl an Arbeitszyklen.

Die Korngröße der erfindungsgemäß verwendeten Nano-Partikel variiert vorzugsweise etwa im Bereich zwischen 15 und 250 Nanometern. Das unter Verwendung dieser nanoskaligen Partikel hergestellte Kunststoffmaterial kann als Gießmaterial oder als Blockmaterial vorliegen. Der Anteil der nanoskaligen Partikel in dem Kunststoff kann über weite Bereiche variieren. Besonders bevorzugt ist die Verwendung eines Anteils von zwischen etwa 5 Gewichtsprozent und etwa 60 Gewichtsprozent nanoskaliger Partikel bezogen auf das Gesamtgewicht des Kompositmaterials. Vorzugsweise liegen dieses nanoskaligen Partikel weitgehend homogen in dem Kunststoff verteilt vor. Die nanoskaligen Teilchen werden dabei in vorteilhafter Weise in das Polymer des Kunststoffs eingebettet. Zur Erzielung einer weitgehend homogenen Verteilung der nanoskaligen Teilchen versieht man diese vorzugsweise bei der Herstellung des Kompositmaterials mit einem Oberflächenmodifikator. Es bildet sich eine glasartige amorphe Struktur indem Kunststoff, die diesem Eigenschaften verleiht, die ihn für die Verwendung als Werkzeugwerkstoff besonders geeignet macht, wobei dieser Werkstoff trotz der glasartigen Struktureigenschaften der Grundmasse, insbesondere deren Elastizität beibehält. Als Kunststoffe für die Grundmasse kommen insbesondere Polyurethane, Epoxydharze oder Kunststoffe mit vergleichbaren Eigenschaften in Betracht.

Für die nanoskaligen Partikel kommen im Rahmen der vorliegenden Erfindung in erster Linie Partikel aus anorganischen Substanzen in Betracht. Dies können beispielsweise Oxide von Metallen sein. Je nach Anwendungszweck können Oxide von Metallen mit ausreichender Härte und/oder Reibfestigkeit bevorzugt sein, wie beispielsweise Siliziumoxide, Titanoxide oder dergleichen.

Im Rahmen der vorliegenden Erfindung wurden Untersuchungen angestellt, bei denen Mischungen aus Kunststoff, die nanoskalige Partikel enthielten mit Kunststoffen, die andere Additive enthielten verglichen wurden, wobei sich die die nanoskaligen Partikel gemäß der Erfindung enthaltenden Kunststoffe im Hinblick auf verschiedene Eigenschaften als besonders vorteilhaft erwiesen, insbesondere im Hinblick auf die Verschleißeigenschaften, die Druckfestigkeit und Reibeigenschaften. Im Rahmen dieser Untersuchungen wurden REM-Aufnahmen von verschiedenen Proben von Kunststoffen unter Beimengung von nanoskaligen Teilchen einerseits bzw. konventionellen Füllstoffen andererseits sowie Festschmierstoffen angefertigt und es konnte gezeigt werden, dass diese Additive in unterschiedlichen Verteilungen der Partikel in der Kunststoffmatrix vorliegen. Bei einigen Versuchen zeigte sich bereits beim Rühren des noch nicht verfestigten Materials, dass Inhomogenität und Klumpenbildungen auftraten. Beim Aushärten der Proben wurde festgestellt, dass in dem Kunststoff viele Lufteinschlüsse vorhanden sind. Wenn dagegen die nanoskaligen Teilchen unter Verwendung geeigneter Oberflächenmodifikatoren in den Kunststoff eingebettet wurden, zeigte sich in der Kunststoffmatrix eine wesentlich bessere Vereilung der nanofeinen Partikel. Es wird angenommen, dass durch die erfindungsgemäße Einbettung nanoskaliger Partikel in den Kunststoff ein amorpher Festkörper entsteht, wobei die Oberfläche der Nano-Feststoffpartikel von der Kunststoffmatrix benetzt wird. Es scheint eine feste Bindung zwischen den beiden Phasen zu entstehen. Diese Annahme wird auch durch REM-Aufnahmen von Proben des erfindungsgemäßen Werkstoffs bestätigt, der in eine Stickstofflösung eingetaucht und zerbrochen wurde. Im Bereich der Bruchfläche sind glatte Flächen und keine Partikelspitzen zu erkennen.

Im Rahmen der erfindungsgemäßen Untersuchungen wurde jeweils das E-Modul und die Druckfestigkeit von Kunststoffen mit nanoskaligen Partikeln gemäß der Erfindung einerseits und Kunststoffen mit konventionellen Pulverpartikeln untersucht und verglichen. Bereits die Beimengung von beispielsweise etwa 20 % nanoskaliger Partikel führte zu einer erheblich erhöhten Druckfestigkeit gegenüber den lediglich konventionelle Füllstoffe enthaltenden Kunststoffen.

Mit den erfindungsgemäßen Kunststoffen wurden Werkzeuge hergestellt und mit diesen Werkzeugen wurden Tiefziehversuche durchgeführt. Dabei wurde festgestellt, dass sich sowohl die Maßgenauigkeit als auch die Standzeit der Tiefziehwerkzeuge stark verbessert. Im Normalfall sind derartige Tiefziehwerkzeuge aus Kunststoff relativ schnell verschlissen. Durch das Einbetten nanoskaliger Partikel in einer Menge von beispielsweise etwa 20 Gewichtsprozent bezogen auf das Gesamtgewicht des Kompositmaterials konnten bessere Reib- und Verschleißverhältnisse erreicht werden. Durch das Einbetten weiterer Gleitstoffe wie beispielsweise Graphit oder Molybdänsulfid konnte das Verschleiß- und das Tiefziehverhalten der Werkzeuge weiter verbessert werden, wie sich aus den nachfolgenden Ausführungsbeispielen ergibt.

Die erfindungsgemäßen Kunststoffwerkzeuge mit eingebetteten nanoskaligen Partikeln haben den Vorteil, dass die Materialkosten um einiges (beispielsweise um bis zu 70 %) geringer liegen als bei herkömmlichen Stahlwerkzeugen. Diese Werkzeuge lassen sich besser verarbeiten und benötigen dabei einen geringeren maschinellen Einsatz. Dies führt zu einem verringerten Energie- und Leistungsbedarf bei der Maschinenarbeit. Die erfindungsgemäßen Kunststoffwerkzeuge haben eine kürzere Einarbeitungszeit als Stahlwerkzeuge. Sie haben ein wesentlich geringeres Gewicht. Es lassen sich: beispielsweise Gewichtsreduzierungen von bis zu 60 % erreichen, wodurch die Belastung von beispielsweise Krananlagen bei der Handhabung der Werkzeuge verringert werden kann.

Die erfindungsgemäßen Kunststoffwerkzeuge bzw. daraus gefertigte Kunststoffeinsätze für Werkzeuge lassen sich leichter ändern, was ebenfalls mit einer Kosten-, Energie- und Zeiteinsparung einhergeht. Ausgediente Werkzeuge können vollständig wiederverwendet werden, beispielsweise als Füllstoffe bei neuen Kunststoffwerkzeugen, so dass die Kosten für die Entsorgung entfallen. Da die Kunststoffwerkzeuge ein elastisches Verhalten zeigen, erzielt man eine Qualitätserhöhung bei den mittels solcher Umformwerkzeuge umgeformten Werkstücken. Die Reibungsverhältnisse insbesondere bei Tiefziehverfahren werden verbessert durch das Einbringen weiterer Substanzen mit Gleiteigenschaften. Dadurch können bisher notwendige flüssige Schmiermittel entfallen, wodurch das Umformverfahren umweltverträglicher wird.

Die vorliegende Erfindung betrifft weiterhin ein Verfahren zur Umformung von Werkstücken, insbesondere von Metallteilen, mittels eines mindestens teilweise aus Kunststoff bestehenden Umformwerkzeugs, bei dem erfindungsgemäß das Umformwerkzeug einen in den Kunststoff eingelagerten Anteil an nanoskaligen Partikeln enthält, wobei in den Kunststoff des Werkzeugs weiterhin ein Anteil an einem Material mit Gleiteigenschaften eingelagert ist. Gemäß einer bevorzugten Weiterbildung der Erfindung dient ein solches Umformwerkzeug als Tiefziehwerkzeug in einem Verfahren zum Tiefziehen von Metallblechen, insbesondere von Karosseriebauteilen oder Karosserien für Automobile.

Nachfolgend wird die folgende Erfindung anhand von Ausführungsbeispielen unter Bezugnahme auf die beiliegenden Abbildungen näher beschrieben. Dabei zeigen
- Fig. 1: eine REM-Aufnahme eines Schnitts durch einen Kunststoff für ein erfindungsgemäßes Werkzeug gemäß einer ersten Probe P-b1
- Fig. 2: eine weitere REM-Aufnahme der gleichen Probe wie in Fig. 1 jedoch in stärkerer Vergrößerung
- Fig. 3: eine REM-Aufnahme einer Bruchfläche einer Probe eines erfindungsgemäßen Kunststoffs, die in eine Stickstofflösung eingetaucht und zerbrochen wurde
- Fig. 4: eine graphische Darstellung des E-Moduls und der Druckfestigkeit bei Verwendung verschieden großer Anteile an nanoskaligen Partikeln in Kunststoffen
- Fig. 5: eine graphische Darstellung der Reibwerte bei Verwendung von Tiefziehwerkzeugen aus Kunststoffen, die verschiedene Füllstoffe enthalten
- Fig. 6: eine graphische Darstellung, die das Verschleißverhalten von Werkzeugen aus Kunststoffen mit unterschiedlichen Füllstoffen beim Tiefziehen mit steigender Anzahl von Hüben demonstriert.

Im Rahmen der vorliegenden Erfindung wurden verschiedene Chargen von Kunststoffen untersucht, denen nanoskalige Partikel mit unterschiedlichen Korngrößen zugegeben wurden. Die Eigenschaften der untersuchten Proben P-D4 P-b1, P-b2 und P-b3 nanoskaliger Partikel sind in der nachfolgenden Tabelle 1 wiedergegeben.

**Tabelle 1**

| | **Nanopartikel** | | | |
|---|---|---|---|---|
| **Eigenschaften** | **P-D4** | **P-b1** | **P-b2** | **P-b3** |
| Nanopartikel-Gehalt [%] | 99,00 | 94,80 | 94,70 | 96,60 |
| Wasserlöslichkeit [%] | 0,150 | 0,007 | 0,010 | 0,007 |
| Glühverlust [%] | - | 3,3 | 3,5 | 3,0 |
| Feuchtgehalt | - | 0,38 | 0,33 | 0,40 |
| pH-Wert Suspension in Wasser | 9 | 10,8 | 8,5 | 5,7 |
| Spezifische Oberfläche BET [m2/g] | 3 | 51 | 50 | 29 |
| Korngröße [nm] | 800 | 28 | 28 | 47 |
| Mittlerer Partikeldurchmesser: | - | 3,5 | 3 | 0,14 |
| nach Laserbeugung [µm] | | | | |
| gemäß Röntgenbeugung [nm] | - | 28 | 28 | 47 |

Wie man der Tabelle entnimmt, betrug die Korngröße bei der Probe P-D4 800 nm, während die Korngröße bei den anderen Nanopartikeln wesentlich kleiner war. Die nanoskaligen Partikel wurden jeweils mit Oberflächenmodifikatoren versehen und einer Kunststoffmasse zugefügt. Bei den Versuchen mit der Probe P-D4 zeigte sich schon beim Rühren Inhomogenität und es trat Klumpenbildung auf. Beim Aushärten der Probe wurde festgestellt, dass zahlreiche Lufteinschlüsse in dem Kunststoff enthalten sind.

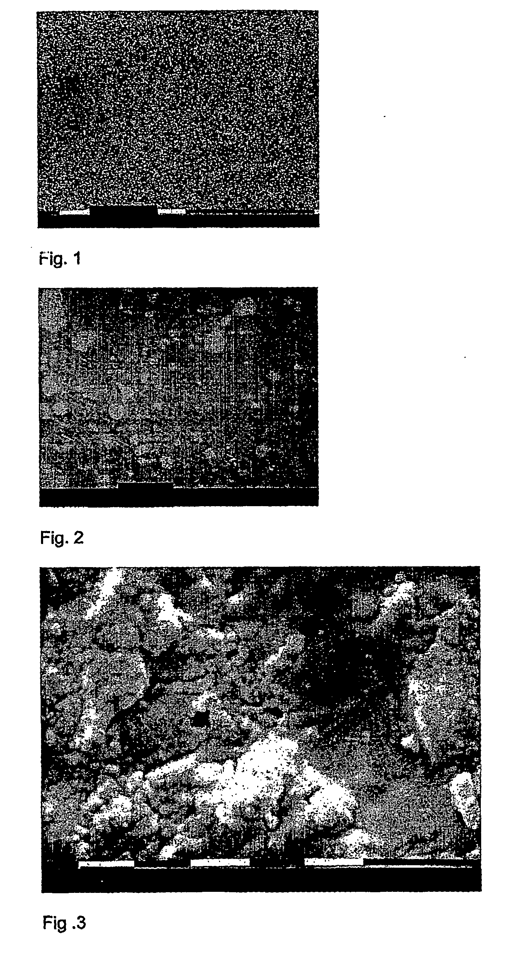

Hingegen wurde festgestellt, dass bei den Proben mit den nanoskaligen Partikeln, die gemäß der Tabelle eine wesentlich kleinere Korngröße aufwiesen eine wesentlich bessere Verteilung der nanofeinen Partikel in der Kunststoffmatrix erzielt wurde. Dies bestätigen entsprechende REM-Aufnahmen. Fig. 1 zeigt eine REM-Aufnahme eines Schnitts durch einen Kunststoff für ein erfindungsgemäßes Werkzeug gemäß der Probe P-b1, die in der zweiten Spalte von links der Tabelle 1 aufgeführt ist. In Fig. 1 kann man gut die gleichmäßige Verteilung der nanoskaligen Partikel in dem Kunststoff erkennen. Fig. 2 zeigt eine entsprechende REM-Aufnahme der gleichen Probe, jedoch in stärkerer Vergrößerung.

Im Rahmen der Untersuchung der Materialeigenschaften eines nanoskalige Partikel haltigen Kunststoffs wurde eine Probe der Charge P-b1 (siehe Tabelle 1) in eine Lösung aus flüssigem Stickstoff eingetaucht und anschließend zerbrochen. Fig. 3 zeigt eine REM-Aufnahme der Bruchfläche einer solchen Probe. Dabei ist zu erkennen, dass an der Bruchfläche glatte Flächen vorliegen und keine Partikelspitzen zu sehen sind. Daraus kann man auf eine feste Bindung schließen, die zwischen dem nanoskaligen Pulver und der Kunststoffmatrix entstanden ist.

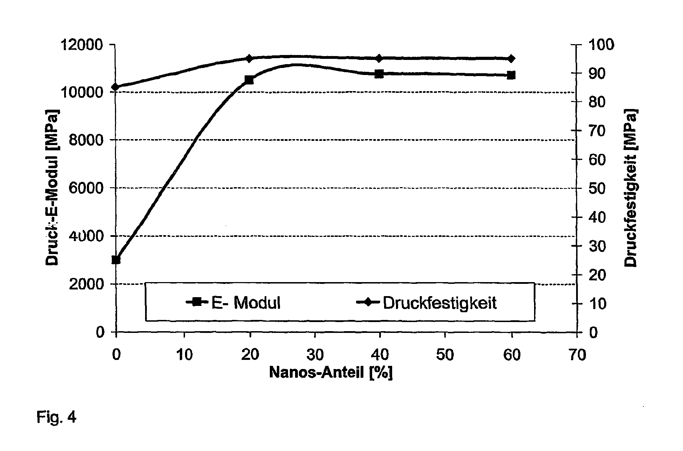

Zur Untersuchung der Eignung der erfindungsgemäßen Kunststoffe als Werkzeugwerkstoff wurden verschiedene Materialkennwerte, insbesondere das Druck-E-Modul [MPa] und die Druckfestigkeit [MPa] der Kunststoffe ermittelt und in der grafischen Darstellung gemäß Fig. 4 festgehalten. Dabei steigt in der Grafik der Anteil nanoskaliger Partikel in dem Kunststoff von links nach rechts an. Bei beiden Kennwerten, insbesondere bei dem Elastizitätsmodul kann man der Grafik entnehmen, dass bereits eine erhebliche Steigerung der Materialsteifigkeit bei Zugabe von etwa 20 % nanoskaliger Teilchen erzielt wird. Weitere Untersuchungen zeigen, dass man bei zusätzlicher Verwendung konventioneller Füllstoffe eine weitere erhebliche Erhöhung des E-Modulwertes und eine Steigerung der Druckfestigkeit erzielen kann.

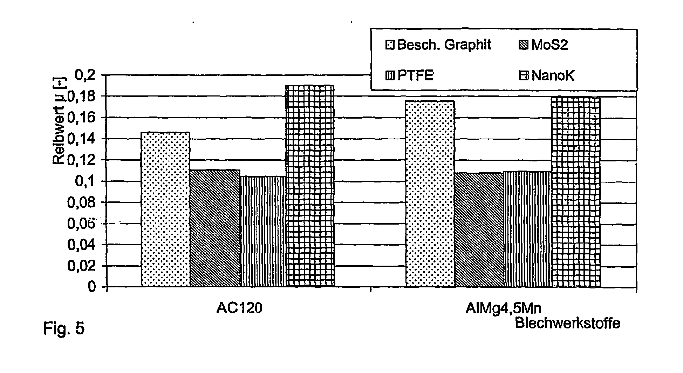

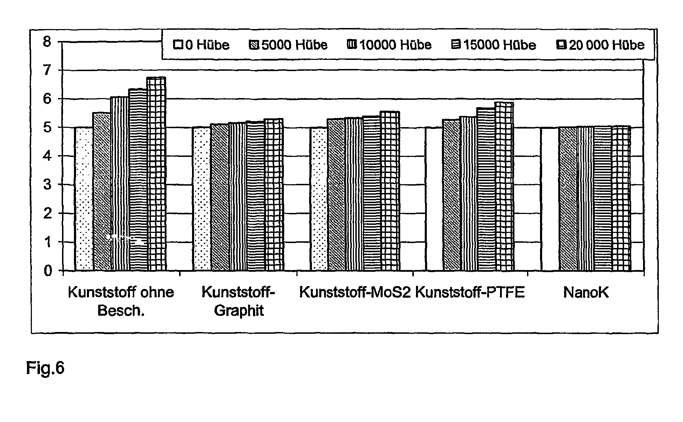

Im Rahmen der vorliegenden Erfindung wurden Reibversuche durchgeführt, bei denen verschiedene Blechwerkstoffe mit Hilfe von Werkzeugen tiefgezogen wurden, die aus erfindungsgemäßen Kunststoffen mit einem Anteil nanoskaliger Partikel einerseits und aus Vergleichskunststoffen andererseits hergestellt wurden, die einen Anteil an einem Material mit Gleiteigenschaften enthielten. Die Ergebnisse sind in Fig. 6 festgehalten. Dabei sind die Tiefziehergebnisse für zwei verschiedene Blechwerkstoffe, nämlich einmal AC 120 und zum anderen ein Blech aus einer Aluminiummagnesiumlegierung AlMg4,5Mn dargestellt, wobei in beiden Fällen jeweils Tiefziehwerkzeuge aus vier verschiedenen Kunststoffen untersucht wurden. Die in beiden Darstellungen jeweils ganz links dargestellte Säule entspricht dem Reibwert für einen Kunststoff, der als Material mit Gleiteigenschaften Graphit enthielt. Danach folgt von links nach rechts betrachtet ein Kunststoff, der als Material mit Gleiteigenschaften Molybdänsulfid enthielt, danach von links nach rechts gesehen ein Kunststoff mit einem Anteil an PTFE und schließlich die jeweils ganz rechts dargestellte Säule, bei der der Kunststoff gemäß der Erfindung einen Anteil nanoskaliger Partikel enthielt. Die in der Fig. 5 dargestellten Reibergebnisse zeigen, dass der erfindungsgemäße Kunststoff in beiden Fällen mit einem mittleren Reibwert von ca. 0,19 die besten Eigenschaften im Hinblick auf Verschleiß besitzt. Insbesondere ist es erstaunlich, dass sich bei Zugabe der nanoskaligen Partikel eine bessere Verschleißfestigkeit ergibt als bei Zugabe herkömmlicher Additive zum Kunststoff, die für ihre Gleiteigenschaften bekannt sind.

In einem weiteren Versuch wurde das Verschleißverhalten von Werkzeugen aus Kunststoffen mit unterschiedlichen Füllstoffen untersucht, indem mittels Werkzeugen aus diesen Kunststoffen Bleche mit einer großen Anzahl aufeinanderfolgender Hübe tiefgezogen wurden. Das Ergebnis ist in der grafischen Darstellung gemäß Fig. 6 wiedergegeben. Es ist jeweils die relative Verschleißfestigkeit dargestellt, die sich ergibt im Vergleich mit einem Ausgangswert vor Beginn des Versuchs. Für jeden der untersuchten Werkstoffe sind fünf Säulen dargestellt, wobei die jeweils ganz links gezeichnete Säule dem Ausgangswert entspricht (relative Skala 5),'und danach folgend von links nach rechts gesehen der Wert nach 5.000 Hüben, 10.000 Hüben, 15.000 Hüben und 20.000 Hüben. Man kann aus der Darstellung gemäß Fig. 6 gut erkennen, dass die Verschleißfestigkeit des Werkzeugs mit zunehmender Anzahl an Hüben bei einem Kunststoff ohne nanoskalige Partikel und ohne Kunststoffe mit Gleiteigenschaften sich beständig verschlechtert. Das zweite Säulenpaket ergibt sich aus einem Versuch, bei dem ein Kunststoff mit eingelagertem Graphit verwendet wurde. Das dritte Säulenpaket (von links betrachtet) gibt die Werte für einen Kunststoff mit Molybdänsulfid-Additiv wieder. Das vierte Säulenpaket (von links betrachtet) gibt die Werte für einen Kunststoff mit eingelagertem PTFE als Material mit Gleiteigenschaften wieder. In dem fünften Säulenpaket (in der Darstellung ganz rechts) sind schließlich die Werte für ein Werkzeug aus einem Kunststoff mit nanoskaligen Partikeln wiedergegeben. Man kann gut erkennen, dass auch bei Einlagerung eines Additivs mit Gleiteigenschaften sich die Werte für die Verschleißfestigkeit mit zunehmender Anzahl von Hüben mehr oder weniger stark verschlechtern, wobei allerdings wie man durch Vergleich mit dem Säulenpaket in der Zeichnung ganz links erkennt, die Verschlechterung geringer ist als wenn der Kunststoff kein Additiv enthält. Hingegen bleiben die Verschleißwerte bei dem erfindungsgemäßen Kunststoffwerkzeug mit eingelagerten nanoskaligen Partikeln (Nano-K) auch nach 20.000 Werkzeughüben konstant.

Im Rahmen der vorliegenden Erfindung wurden jeweils Modellwerkzeuge gefertigt, wobei aus verschiedenen Kunststoffen mit nanoskaligen Partikeln gemäß der Erfindung bzw. mit herkömmlichen Additiven Stempel gefertigt wurden, bei denen das Werkzeug in bestimmten Bereichen Radien aufwies. Diese Bereiche, zum Beispiel Randbereiche des Werkzeugs wurden als kritische Bereiche für das Verschleißverhalten nach dem Tiefziehen von jeweils 100 Teilen vermessen. Dabei wurde festgestellt, dass ein aus dem nanoskalige Partikel gemäß der Erfindung enthaltenden Kunststoff gefertigter Stempel das beste Verschleißverhalten aufwies, da sich die geringsten maßlichen Abweichungen an den Radien ergaben.

## Patentansprüche

1. Mindestens teilweise aus Kunststoff bestehendes Werkzeug, das ein Umformwerkzeug ist, **dadurch gekennzeichnet, dass** das Werkzeug einen in den Kunststoff eingelagerten Anteil an nanoskaligen Partikeln enthält und dass in den Kunststoff des Werkzeugs weiterhin ein Anteil an einem Material mit Gleiteigenschaften eingelagert ist.

2. Werkzeug nach Anspruch 1, **dadurch gekennzeichnet, dass** dieses ein Kunststoffblockmaterial oder Gießmaterial umfasst.

3. Werkzeug nach Anspruch 1 oder 2, **dadurch gekennzeichnet, dass** die Partikelgröße der nanoskaligen Partikel überwiegend im Bereich zwischen 15 nm und 250 nm liegt.

4. Werkzeug nach einem der Ansprüche 1 bis 3, **dadurch gekennzeichnet, dass** der Anteil der nanoskaligen Partikel in dem Kunststoff zwischen 5 Gewichtsprozent und 60 Gewichtsprozent bezogen auf das Gesamtgewicht des Kompositmaterials beträgt.

5. Werkzeug nach einem der Ansprüche 1 bis 4, **dadurch gekennzeichnet, dass** die nanoskaligen Partikel weitgehend homogen in dem Kunststoff verteilt vorliegen.

6. Werkzeug, nach einem der Ansprüche 1 bis 5, **dadurch gekennzeichnet, dass** dieses hergestellt ist ausgehend von nanoskaligen Partikeln, die mit einem Oberflächenmodifikator versehen wurden.

7. Werkzeug nach einem der Ansprüche 1 bis 6, **dadurch gekennzeichnet, dass** der Kunststoff eine glasartige amorphe Struktur aufweist.

8. Werkzeug nach einem der Ansprüche 1 bis 7, **dadurch gekennzeichnet, dass** in den Kunststoff des Werkzeugs ein Anteil an einem Material mit Gleiteigenschaften zwischen 10 Gew. % und 60 Gew. %, vorzugsweise zwischen 20 Gew. % und 30 Gew. %, bezogen auf das Gesamtgewicht des Kompositmaterials eingelagert ist.

9. Werkzeug nach Anspruch 8, **dadurch gekennzeichnet, dass** in den Kunststoff des Werkzeugs als Material mit Gleiteigenschaften Graphit und/oder Molybdänsulfid eingelagert ist.

10. Werkzeug nach einem der Ansprüche 1 bis 9, **dadurch gekennzeichnet, dass** dieses mindestens teilweise aus Polyurethan, einem Epoxydharz oder Kunststoffen mit vergleichbaren Eigenschaften besteht.

11. Werkzeug nach einem der Ansprüche 1 bis 10, **dadurch gekennzeichnet, dass** dieses ein Tiefziehwerkzeug ist.

12. Werkzeug nach einem der Ansprüche 1 bis 11, **dadurch gekennzeichnet, dass** dieses ein Stempel, Blechhalter oder eine Matrize für das Tiefziehen von Metallteilen ist.

13. Verfahren zur Umformung von Werkstücken, insbesondere von Metallteilen, mittels eines mindestens teilweise aus Kunststoff bestehenden Umformwerkzeugs, **dadurch gekennzeichnet, dass** das Umformwerkzeug einen in den Kunststoff eingelagerten Anteil an nanoskaligen Partikeln enthält und dass in den Kunststoff des Werkzeugs weiterhin ein Anteil an einem Material mit Gleiteigenschaften eingelagert ist.

14. Verfahren nach Anspruch 13, **dadurch gekennzeichnet, dass** das Umformwerkzeug als Tiefziehwerkzeug in einem Verfahren zum Tiefziehen von Metallblechen, insbesondere von Karosseriebauteilen für Automobile, dient.

## Claims

1. Tool, in the form of a forming tool, consisting at least in part of plastics, **characterized in that** the tool contains a proportion of nanoscale particles incorporated into the plastics and **in that** a proportion of a material with surface-slip characteristics is additionally incorporated into the plastics of the tool.

2. Tool according to Claim 1, **characterized in that** said tool comprises a plastics block material or casting material.

3. Tool according to Claim 1 or 2, **characterized in that** the particle size of the nanoscale particles is predominantly in the range of between 15 nm and 250 nm.

4. Tool according to one of Claims 1 to 3, **characterized in that** the proportion of nanoscale particles in the plastics amounts to between 5 weight percent and 60 weight percent relative to the total weight of the composite material.

5. Tool according to one of Claims 1 to 4, **characterized in that** the nanoscale particles are largely homogeneously distributed in the plastics.

6. Tool according to one of Claims 1 to 5, **characterized in that** said tool is produced starting from nanoscale particles, which have been provided with a surface modifier.

7. Tool according to one of Claims 1 to 6, **characterized in that** the plastics has a glass-like amorphous structure.

8. Tool according to one of Claims 1 to 7, **characterized in that** a proportion of a material with surface-slip characteristics of between 10 wt.% and 60 wt.%, preferably between 20 wt.% and 30 wt.%, relative to the total weight of the composite material is incorporated into the plastics of the tool.

9. Tool according to Claim 8, **characterized in that** graphite and/or molybdenum sulphide is incorporated into the plastics of the tool as the material with surface-slip characteristics.

10. Tool according to one of Claims 1 to 9, **characterized in that** said tool consists at least in part of polyurethane, an epoxy resin or plastics with comparable properties.

11. Tool according to one of Claims 1 to 10, **characterized in that** said tool is a deep-drawing tool.

12. Tool according to one of Claims 1 to 11, **characterized in that** said tool is a punch, a blank holder or a draw die for deep-drawing metal parts.

13. Method for forming workpieces, in particular metal parts, by means of a forming tool consisting at least in part of plastics, **characterized in that** the forming tool contains a proportion of nanoscale particles incorporated into the plastics and **in that** a proportion of a material with surface-slip characteristics is additionally incorporated into the plastics of the tool.

14. Method according to Claim 13, **characterized in that** the forming tool serves as a deep-drawing tool in a method for deep-drawing metal sheets, in particular automotive body components.

## Revendications

1. Outil, au moins en partie constitué de plastique, constituant un outil de déformation, **caractérisé en ce que** l'outil comprend une partie constituée de particules nanométriques, incorporée dans le plastique, et **en ce qu'**une partie constituée d'un matériau ayant des propriétés de glisse est également incorporée dans le plastique de l'outil.

2. Outil selon la revendication 1, **caractérisé en ce qu'**il contient un matériau plastique en bloc ou un matériau de coulage.

3. Outil selon la revendicaiton 1 ou 2, **caractérisé en ce que** la taille de particules des particules nanométriques est principalement comprise entre 15 nm et 250 nm.

4. Outil selon l'une quelconque des revendications 1 à 3, **caractérisé en ce que** la partie constituée de particules nanométriques dans le plastique représente de 5 pourcent en poids à 60 pourcent en poids par rapport au poids total du matériau composite.

5. Outil selon l'une quelconque des revendications 1 à 4, **caractérisé en ce que** les particules nanométriques sont réparties de manière sensiblement homogène dans le plastique.

6. Outil selon l'une quelconque des revendications 1 à 5, **caractérisé en ce qu'**il est fabriqué essentiellement à partir de particules nanométriques munies d'un modificateur de surface.

7. Outil selon l'une quelconque des revendications 1 à 6, **caractérisé en ce que** le plastique présente une structure vitreuse amorphe.

8. Outil selon l'une quelconque des revendications 1 à 7, **caractérisé en ce qu'**une partie constituée d'un matériau ayant des propriétés de glisse est incorporée dans le plastique de l'outil, à hauteur de 10% en poids à 60 % en poids, de préférence de 20 % en poids à 30 % en poids, par rapport au poids total du matériau composite.

9. Outil selon la revendication 8, **caractérisé en ce que** du graphite et/ou du sulfure de molybdène sont incorporés dans le plastique de l'outil en tant que matériau ayant des propriétés de glisse.

10. Outil selon l'une quelconque des revendications 1 à 9, **caractérisé en ce qu'**il est constitué au moins en partie de polyuréthanne, d'une résine époxyde ou de plastiques ayant des propriétés semblables.

11. Outil selon l'une quelconque des revendications 1 à 10, **caractérisé en ce qu'**il constitue un outil d'emboutissage profond.

12. Outil selon l'une quelconque des revendications 1 à 11, **caractérisé en ce qu'**il constitue un poinçon, un serre-flan ou une matrice pour l'emboutissage profond d'éléments métalliques.

13. Procédé de déformation de pièces, notamment d'éléments métalliques, au moyen d'un outil de déformation au moins en partie constitué de plastique, **caractérisé en ce que** l'outil de déformation comprend une partie constituée de particules nanométriques, incorporée dans le plastique, et **en ce qu'**une partie constituée d'un matériau ayant des propriétés de glisse est également incorporée dans le plastique de l'outil.

14. Procédé selon la revendication 13, **caractérisé en ce que** l'outil de déformation est utilisé en tant qu'outil d'emboutissage profond dans un procédé d'emboutissage profond de plaques métalliques, notamment pour des éléments de carrosseries d'automobiles.
